(19) Europäisches Patentamt

European Patent Office

Office européen des brevets

(11) **EP 1 731 788 B1**

(12) **FASCICULE DE BREVET EUROPEEN**

(45) Date de publication et mention
de la délivrance du brevet:
**13.01.2010 Bulletin 2010/02**

(51) Int Cl.:
***F16D 48/06*** *(2006.01)*

(21) Numéro de dépôt: **06300539.1**

(22) Date de dépôt: **31.05.2006**

(54) **Procédé et dispositif de surveillance du glissement d'un embrayage dans une chaîne de transmission comportant une source de couple acyclique**

Verfahren und Vorrichtung zur Beobachtung des Schlupfs einer Kupplung in einer Kraftübertragungskette mit einer azyklischen Drehmomentsquelle

Method and device for monitoring a clutch slip in a transmission with an acyclic torque source

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.06.2005 FR 0505790**

(43) Date de publication de la demande:
**13.12.2006 Bulletin 2006/50**

(73) Titulaire: **Peugeot Citroën Automobiles SA 78140 Vélizy-Villacoublay (FR)**

(72) Inventeur: **Le Dren, Arnaud 92400 Courbevoie (FR)**

(56) Documents cités:
**DE-A1-102004 036 054     US-A- 6 102 144 US-B1- 6 314 342**

## Description

La présente invention a pour objet un moyen de détection du glissement et de quantification dudit glissement partiel d'un embrayage monté entre un moteur à explosion interne et une boîte de vitesse manuelle pilotée ou non.

Dans un véhicule automobile, les organes dits de la chaîne de traction sont essentiellement constitués d'un moteur qui entraîne un arbre de sortie du moteur, d'une boîte de vitesse pour démultiplier le mouvement de l'arbre moteur avant de le transmettre aux roues par le cardan et d'un embrayage pour coupler ou découpler l'arbre de sortie du moteur et l'arbre d'entrée de la boîte de vitesse et limiter le couple transmis lors du glissement.

En dehors de sa fonction de transmission - ou au contraire de non transmission du couple lorsque la voiture est au point mort ou lors d'un changement de vitesse - l'embrayage a également une fonction très importante de découpleur et d'amortisseur des vibrations torsionnelles de la chaîne de traction. En effet, dans un moteur à combustion interne, l'arbre moteur n'est entraîné qu'au moment de l'explosion détente qui déplace le piston. Comme le nombre de pistons n'est pas infini, il existe toujours des temps morts entre deux explosions, de sorte que la rotation de l'arbre moteur n'est pas parfaite mais sujette à des acyclismes plus ou moins grands. Ceux-ci se traduisent par des bruits et/ou vibrations plus ou moins ressenties par les occupants du véhicule et des variations sur les couples transmis à chaque niveau de la chaîne de traction.

Pour minimiser ceux-ci, il est connu de longue date des dispositifs tels que des moyeux amortisseurs reliés au disque d'embrayage par l'intermédiaire d'une part de ressorts ayant une faible raideur et d'autre part de garnitures de friction. De nombreux dispositifs mécaniques visant à améliorer ces moyens amortisseurs ont également été proposés en complément ou substitution desdits moyeux amortisseurs.

Par ailleurs, il est connu de la publication de brevet français FR-A-2 511 154 un procédé pour amortir les vibrations dues aux acyclismes selon lequel on maintient un niveau prédéfini de patinage en position embrayée, autrement dit un certain glissement entre l'arbre de sortie du moteur et l'arbre d'entrée de la boîte de vitesse. Selon cette publication, le patinage doit être maintenu entre environ 25 et 50 tours par minute pour éviter une trop grande génération de chaleur et une usure prématurée des surfaces de friction.

Pour mettre en oeuvre ce dispositif, des moyens de réglage et des moyens de détection du patinage doivent être prévus. Selon la publication précitée, ces moyens de détection sont constitués par des moyens pour détecter la vitesse de rotation de l'arbre de sortie du moteur et des moyens pour détecter la vitesse de rotation de l'arbre d'entrée de la boîte de vitesse et des moyens pour comparer les deux vitesses et obtenir ainsi la différence entre ces deux vitesses représentatives du patinage.

Comme déjà mentionné, la demande de brevet précitée fait appel à des capteurs de vitesses des arbres en amont et aval des disques d'embrayage. Pour éviter une usure trop rapide de l'embrayage, et une trop forte surconsommation en carburant due au frottement permanent, il est indispensable que le niveau de patinage soit maintenu à un niveau le plus bas possible, avec donc un écart entre les différences de vitesse de rotation ne dépassant pas par exemple 1%. Dans le même temps, selon le régime moteur, ces mêmes vitesses peuvent varier très rapidement et dans une grande amplitude. De fait, les exigences en terme de fiabilité et de précision des capteurs couramment commercialisée et même l'utilisation de l'information régime moyen ne permettent pas une réduction suffisante et robuste du glissement.

Pour minimiser ce risque, il a été proposé différentes stratégies de pilotage du glissement qui font appel à des valeurs moyennées. Référence est faite par exemple aux demandes de brevet français FR-A-2 572 032 et FR-A-2,743,128. Toutefois, les algorithmes utilisés sont souvent peu robustes et peu rapides et ils ne permettent pas de détecter un glissement partiel suffisamment faible.

Le document US 6,102,144 décrit un procédé de surveillance d'un embrayage dans une chaîne de transmission de puissance comportant une source de couple acyclique et un embrayage ne filtrant qu'une partie des acyclismes. Dans ce document il est aussi montré une transformation du dit couple filtré par l'embrayage dans l'espace fréquentiel, ainsi qu'une régulation du glissement de l'embrayage pour réduire les vibrations torsionelles en utilisant les composantes de basses fréquences.

Il serait donc souhaitable de disposer d'un moyen de détection du patinage - ou plus généralement de surveillance de tout glissement partiel ou total- qui soit à la fois précis, rapide et robuste notamment afin de répondre correctement dans les phases de variation du régime moteur, par exemple en réponse à une variation de la position de la pédale d'accélérateur.

Une autre utilisation de la détection du glissement consiste dans la détection mise en glissement ou de fin de glissement pendant les phases de changement de rapport et de décollage d'une boîte de vitesse manuelle pilotée (BVMP) ou d'une boîte dite à double embrayage (DCT). La détection précoce du changement d'état permettant d'éviter les sauts de couple.

Une autre utilisation de la détection du glissement serait d'apprendre le point de glissement de l'embrayage en fonction du couple moteur de façon peu perceptible par le conducteur.

Selon l'invention, il est proposé de procéder à la surveillance d'un embrayage filtrant partiellement les acyclismes dans une chaîne de transmission de puissance comportant une source de couple acyclique par l'observation d'un taux d'acyclisme après filtration et l'estimation du glissement (partiel ou total) à partir des variations dudit taux d'acyclisme.

Le taux d'acyclismes est obtenu à partir d'une fonction numérique périodique représentant dans un espace fréquentiel le couple instantané filtré par l'embrayage sur une durée correspondant à un multiple de la période entre deux explosions consécutives. La mise en oeuvre de l'invention suppose ainsi l'enregistrement sur une certaine durée du couple filtré et des moyens pour calculer une fonction numérique représentative du couple filtré mémorisé. Les valeurs mémorisées sont fonction soit du temps, soit de la position angulaire du moteur ou d'une cible placée sur l'arbre primaire, ce qui permet une synchronisation de l'information par rapport à la période entre deux explosions. Le choix du multiple précité est un compromis entre la dynamique du taux d'acyclisme et la robustesse par rapport aux défauts de combustion. Le calcul du taux d'acyclisme est effectué simultanément à la mémorisation du couple sur la période précédemment acquise.

Si, selon un mode de réalisation particulièrement préféré, la fonction numérique dans l'espace fréquentiel est une développée en série de Fourier, de préférence encore en transformée de Fourier discrète (rapide). Le taux d'acyclisme est défini comme une fonction de l'amplitude d'une harmonique de ladite fonction numérique périodique, ladite harmonique étant choisie comme significative pour la source d'acyclisme. Dans le cas d'un moteur à 4 temps et 4 cylindres, l'harmonique de référence sera de préférence de rang 2.

De préférence encore, le taux d'acyclisme calculé selon l'invention est intégré comme paramètre soit dans la stratégie de régulation du moteur, soit dans la stratégie de régulation de l'embrayage ou plus généralement de l'ensemble du groupe motopropulseur du véhicule. En particulier, un glissement permanent très faible ou partiel peut être autorisé dans la mesure où l'invention donne une valeur fiable et quasiment instantanée du taux d'acyclisme (la durée de mesure peut être réduite à un tour moteur, soit des durées d'acquisition par exemple de l'ordre de quelques millisecondes).

L'invention a également pour objet un dispositif de surveillance du taux d'acyclismes comportant des moyens pour acquérir et des moyens pour mémoriser le couple filtré pendant toute la durée d'un cycle de mesure, à une fréquence adéquate et des moyens de calcul pour l'analyse numérique dudit signal. Par ailleurs, le dispositif comprendra de plus des moyens de communication avec les dispositifs de contrôle du groupe motopropulseur. Les informations transmissibles seront le couple moyen, le régime moyen, le taux d'acyclisme et éventuellement le taux d'acyclisme adimensionné par le couple moyen.

D'autres détails et caractéristiques de l'invention ressortent de l'exemple de réalisation de l'invention, décrit ci-dessous en se référant aux dessins annexés dans lesquels :

- la figure 1 est une représentation schématique d'un groupe moteur et d'une transmission munie d'un embrayage dans un véhicule à moteur ;

- la figure 2a montre l'allure instantanée de l'amplitude de couple moteur en fonction de la position des pistons pour un moteur comportant 4 pistons ;

- la figure 2b reprend en filigrane la figure 2 et en trait plein, l'allure de l'amplitude du même couple moteur après filtration par l'embrayage ;

- la figure 2c montre la relation entre l'amplitude de l'harmonique filtré, tel que défini selon l'invention en fonction de taux de filtration par l'embrayage.

- la figure 3 montre la relation directe entre le l'acyclisme de l'harmonique considéré et l'écrêtage du couple transmis par glissement. La figure 3a montre l'évolution du couple filtré au cours du temps pour différents taux de filtration: la figure 3b montre les valeurs des harmoniques correspondants.

- la figure 4 illustre la précision et la pertinence de la méthode de détection de ce brevet.

- La figure 5 montre les opérations nécessaires au calcul et leur séquencement.

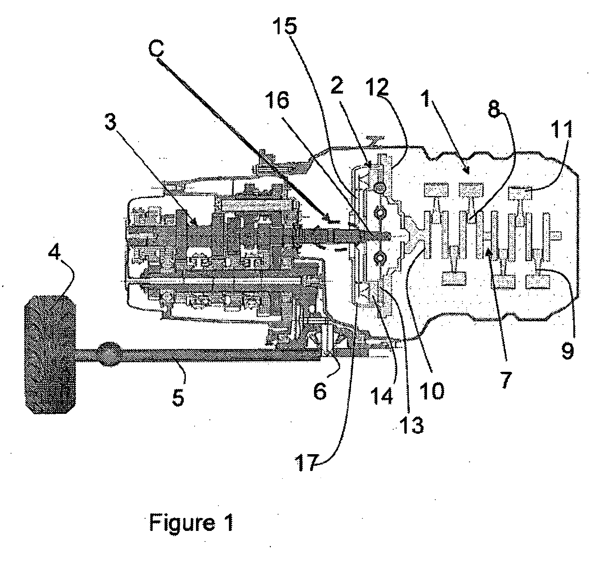

Une unité d'entraînement traditionnelle, à l'exemple de celle communément en place dans un véhicule muni d'une boîte de vitesse dite manuelle (mais éventuellement pilotée) comporte comme illustrée avec la figure 1, un groupe motopropulseur comprenant le bloc moteur 1, l'embrayage 2 et la boîte de vitesse 3.

Le couple moteur est transmis aux roues 4 par un arbre de transmission 5. Un différentiel 6 est de plus présent sur les véhicules modernes qui fournit un couple identique entre les différentes roues motrices, même en virage.

Sur cette figure 1, l'homme de l'art reconnaîtra sans peine le vilebrequin 7 dont les manetons 8 reçoivent les bielles 9, placés entre des contrepoids 10. Les bielles 9 transmettent le mouvement rectiligne des pistons 11 en un mouvement rotatif, qui se traduit par un couple moteur transmis au volant moteur 12.

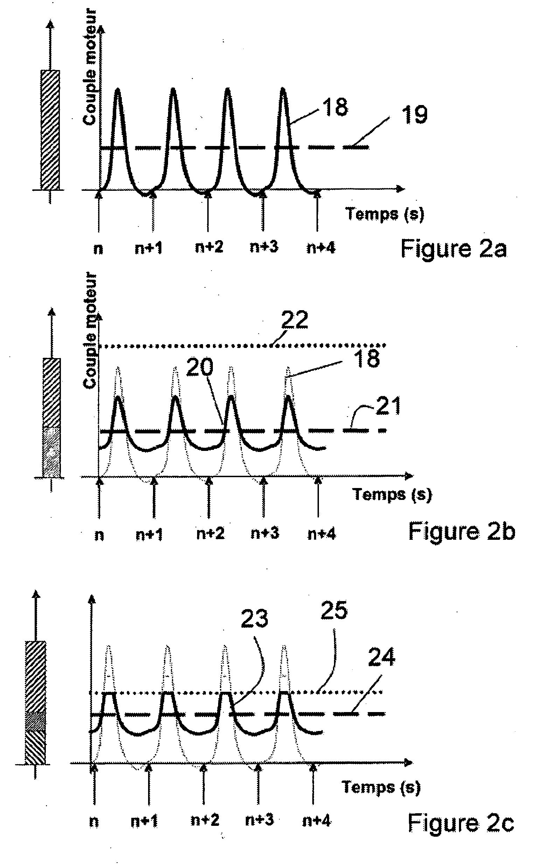

A la figure 2a, on a représenté de façon schématique l'allure caractéristique de la courbe d'amplitude du couple moteur en fonction du temps. A chaque fois que qu'un piston est au point mort, le couple moteur instantané est nul. A chaque explosion, le couple moteur instantané est maximum. La courbe est donc une fonction périodique, dont on notera toutefois qu'elle n'obéit pas à une loi sinusoïdale simple. A régime moteur constant, le couple moteur moyen est une fonction constante au cours du temps.

De retour à la figure 1, l'embrayage est représenté par un plateau de pression 13 coopérant avec le volant moteur 12, un disque d'embrayage 14, muni d'une timonerie ici non représentée, le disque mené 15 rendu solidaire de la boite de vitesse 3 par l'arbre d'entrée de la boite de vitesse 16 et formant l'enveloppe externe du système d'embrayage, une cage d'embrayage 17. On a également fait figuré en C l'emplacement du capteur de couple utilisé selon l'invention comme il sera détaillé plus après.

Les figures 2a, 2b, 2c montre l'évolution de ce couple intermédiaire en fonction du temps. Le couple instantané généré par le moteur est représenté par la courbe 18, qui correspond à un signal périodique avec une période correspondant à l'intervalle entre deux points morts hauts, n, n+1, etc. A régime moteur constant, le couple moteur moyen lui reste stable et est ici représenté par la courbe 19.

A la figure 2b, on a représenté en pointillés le couple moteur transmis 18 et en traits pleins le couple instantané 20 effectivement transmis par l'embrayage, soit un couple moyen 21 transmis par l'embrayage lui aussi constant dans l'hypothèse d'un régime moteur constant. La réduction de l'amplitude des pics du couple instantané transmis est essentiellement attribuable à l'inertie du moteur qui « lisse » l'effet des points morts hauts. A noter que le couple instantané est inférieur au couple instantané transmissible à l'embrayage noté par la droite 22.

Si le couple est partiellement filtré comme illustré à la figure 2c, le couple instantané transmis par l'embrayage 23 est écrêté car il est plafonné alors par le couple instantané transmissible de l'embrayage 25, de sorte que le couple moyen effectivement transmis 24 est bien sûr inférieur à celui transmis en l'absence de filtration.

Selon l'invention, il est proposé de décomposer ce signal de couple transmis en un signal périodique dans l'espace fréquentiel, autrement dit, représenter ce signal de couple transmis périodique par son développement en transformée de Fourier rapide X (Fast Fourier Transformation) de x, donc en considérant pour le couple intermédiaire la fonction :

$$X(k) = \sum_{j=1}^{N} x(j)\omega_N^{(j-1)(k-1)}$$

$$x(j) = (1/N)\sum_{k=1}^{N} X(k)\omega_N^{-(j-1)(k-1)}$$

dans laquelle N est le nombre d'échantillons et $\omega_N$ la racine Nième, avec

$$\omega_N = e^{(-2\pi i)/N}$$

A noter que lorsqu'on opte ainsi pour une transformée de Fourier rapide conformément à un mode de réalisation préféré de l'invention, on ne retiendra que le terme correspondant à l'harmonique représentative.

Cette fonction traduit le fait que le couple acyclique d'un moteur thermique comporte des harmoniques significatifs liés au fonctionnement du moteur en particulier à son régime. L'harmonique de rang n=1 est caractéristique du régime moteur. Dans un moteur à 4 cylindres, chaque tour correspond à deux explosions, donc tout phénomène correspondant à un cylindre se faisant sur deux tours moteurs sera de l'ordre 0,5. Le couple acyclique sera de préférence considérer sur un cycle complet des 4 cylindres, autrement dit l'harmonique représentative sera de préférence n=2 (notée par la suite H2). Pour autant, toute valeur multiple de 0,5 pourrait être choisie.

De façon similaire, dans un moteur muni de 6 cylindres, l'harmonique H3 sera typiquement retenue comme significative du couple acyclique.

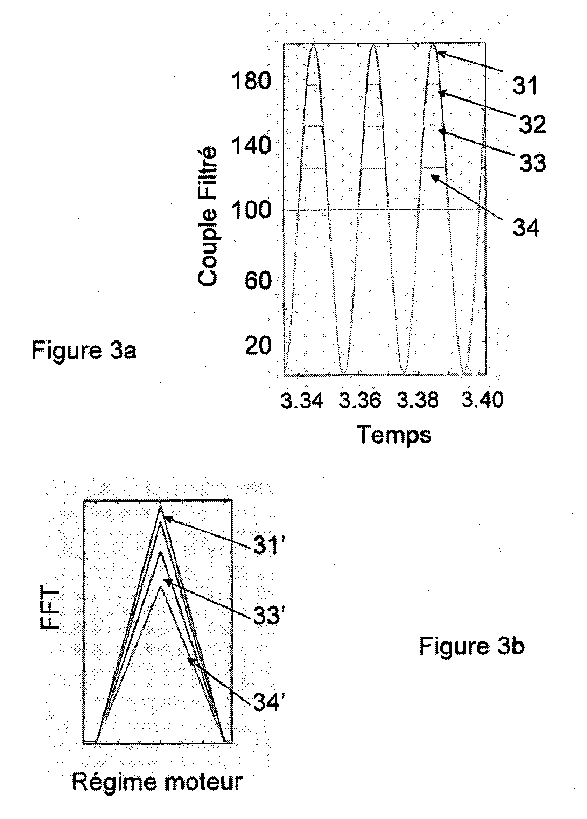

La figure 3 montre la relation directe entre l'acyclisme de l'harmonique considéré et l'écrêtage du couple transmis par le glissement. A la figure 3a, on a ainsi représenté I la variation en cours du temps du couple non filtré (amplitude maximale) 31, et les couples filtrés à 25%, 75% et 100% (respectivement notés 32, 33 et 34). La base 100. Comme montré à la figure 3b, dans laquelle on a noté par 31' les valeurs d'harmoniques obtenues pour un couple non filtré, avec un régime moteur variant entre 1485 tours minute et 1515 tours minutes, dépendent clairement du régime moteurs mais les pics correspondant aux différents niveaux de filtration sont bien visibles. A noter que ces informations sont également montrées figure 2, juste à gauche de l'axe des ordonnées, où on a fait figurer l'évolution de l'harmonique H2.

Selon le théorème de Shannon, tout phénomène cyclique doit être observé par une fréquence d'échantillonnage correspondant à au moins à deux fois la fréquence observable la plus élevée dans le signal. Dans le cas d'un moteur à 4 cylindres, cette règle est donc respectée si la fréquence d'échantillonnage et au moins égale à quatre fois la fréquence du régime moteur. Donc si le H2 est prépondérant, on pourra prendre une fréquence d'au moins R/15 (R étant le régime moteur exprimé en tours par minute). Si les harmoniques correspondant à d'autres phénomènes sont tels que le niveau d'harmonique H4 ne peut être négligé, une fréquence plus importante sera préférée, par exemple au moins égale à R/7.

Conformément à un mode de réalisation préféré de l'invention, la transmission du véhicule est munie d'un moyen de détermination du couple en sortie d'embrayage, à l'entrée de l'arbre primaire de la boite de vitesse. Ce moyen est typiquement un capteur de couple suffisamment précis et dynamique.

Pour un régime moteur de par exemple 4500 tours par minute ou autrement dit 75 tours par seconde, un tour est effectué toutes les 13,33 ms - ce qui correspond pour un moteur 4 temps à un harmonique d'ordre 1 comme indiqué plus haut, observant un phénomène sur 2 cylindres. L'harmonique d'ordre 2 est lui obtenu sur l'observation sur un demi-tour (au niveau d'un cylindre) soit une durée de 6,67 ms. Et une fréquence de 150Hz. Pour une précision optimale, l'échantillonnage doit être effectué avec une fréquence double de la fréquence observée, donc dans le cas considéré 300 Hz.

Dans l'hypothèse d'un régime moteur de 8000 tours par minute, l'homme de l'art vérifiera aisément, que l'harmonique d'ordre 2 est obtenu sur une durée de 3,53 ms, avec une fréquence de 283.33 Hz, donc une fréquence optimale d'échantillonnage d'environ 600 Hz, ces valeurs montrant que l'observation peut parfaitement être effectuée avec des fréquences d'échantillonnage par exemple de l'ordre du kilohertz, ce qui montre que l'invention peut être mise en oeuvre facilement.

L'invention propose donc d'enregistrer en temporel le couple transmis par l'embrayage, sur une durée correspondant à un multiple de la période entre deux explosions, soit un demi tour moteur, de mesurer la durée et de calculer d'une part le couple moyen transmis sur cette durée et d'autre part une fonction périodique représentative dans un espace fréquentiel dudit signal temporel. Le couple filtré est ainsi représenté par une série d'harmoniques dont certaines sont considérées comme représentatives du taux d'acyclisme du couple moteur. L'amplitude desdites harmoniques de préférence adimensionnée par exemple en considérant non l'amplitude proprement dit mais le rapport de l'amplitude sur le couple filtré moyen, peut ainsi être considérée comme une grandeur caractéristique de l'acyclisme du couple moteur.

La première étape pour la mise en oeuvre de l'invention sera donc d'enregistrer le couple filtré. Cet enregistrement doit être effectué sur une période suffisante pour permettre au phénomène d'être observé, pendant la durée s'écoulant entre deux explosions. Dans l'hypothèse d'un moteur à 4 temps - 4 cylindres, l'enregistrement devra donc être effectué sur une durée correspondant au moins à un demi-tour moteur. Bien entendu, des durées d'acquisitions plus longues sont possibles, par exemple de un ou deux tours moteur.

Toujours dans le cas d'un moteur 4 temps - 4 cylindres, comme développé plus haut, cet enregistrement sera effectué de préférence à une fréquence F, exprimée en Hertz, au moins égale à R/15, R étant le régime moteur exprimé en tours par minute. En pratique, une fréquence de l'ordre de au moins deux fois, et de préférence encore d'environ dix fois cette fréquence minima sera préférée pour éviter l'observation de phénomènes parasitaires. On pourra moyenner l'information et la rendre robuste aux ratés de combustion, par une durée d'acquisition du signal plus grande (par exemple un nombre entier de périodes entre deux explosions), mais avec alors l'inconvénient d'augmenter le retard entre l'acquisition de l'information et son traitement (et par la suite son intégration dans la chaîne de stratégie du réglage moteur). En particulier, on pourra identifier un glissement partiel, et piloté l'embrayage par rapport à des cartographies nominales en conséquence pour identifier plus finement le niveau de glissement partiel, ou se contenter d'identifier sa variation instantanée.

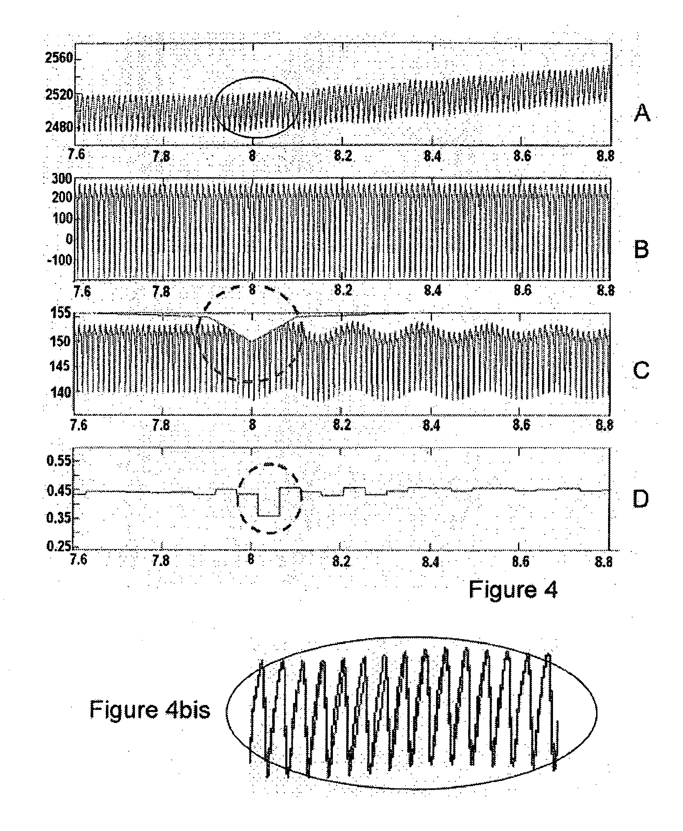

La notion de détection du glissement est plus particulièrement montrée à la figure 4. Sur cette figure, on a représenté en A les variations du régime (en tours par minutes) du moteur et de l'embrayage au cours du temps (abscisses, exprimé en secondes), en supposant une mise en glissement par ouverture partiel au voisinage de 8 secondes. Même en utilisant un grossissement important, à l'exemple de la figure 4bis, cette mise en glissement ne produit pratiquement pas de variation du régime et est donc à ce niveau quasi-indétectable.

Si en parallèle on enregistre le couple (en Nm) du moteur comme montré en B ; et celui de l'embrayage comme montré en C, on note que la mise en glissement s'accompagne d'un point d'inflexion bien marqué, même si dans les instants qui suivent (entre 8,1 s et 8,8 s dans le cas représenté le signal est quelque peu instable. Si maintenant on observe l'harmonique H2 comme illustré en D, on note une baisse très significative de la valeur de l'harmonique au moment de la mise en glissement, avec à la suite des variations correspondant aux instabilités mais beaucoup plus petites.

Si on revient donc sur le traitement du signal selon l'invention, après la phase d'enregistrement, des moyens de calcul sont utilisés pour approximer la valeur du couple par une fonction numérique périodique représentant dans un espace fréquentiel le couple instantané filtré par l'embrayage. Comme indiqué plus haut, on utilisera de préférence une développée en série de Fourier rapide appliquée à l'enregistrement précédemment mémorisé. L'enregistrement pourra être dupliqué pour augmenter le nombre de périodes sur lequel sera calculé la transformée de Fourier afin de rendre le calcul aux effets de fenêtrage.

Cette numérisation achevée, il suffit de calculer d'une part le couple filtré moyen et d'autre part l'amplitude d'une harmonique significative (typiquement de rang x/2 où x est le nombre de cylindres du moteur), et de considérer le rapport entre cette harmonique et ce couple moyen comme une grandeur représentative de l'acyclisme - et de sa filtration par l'embrayage.

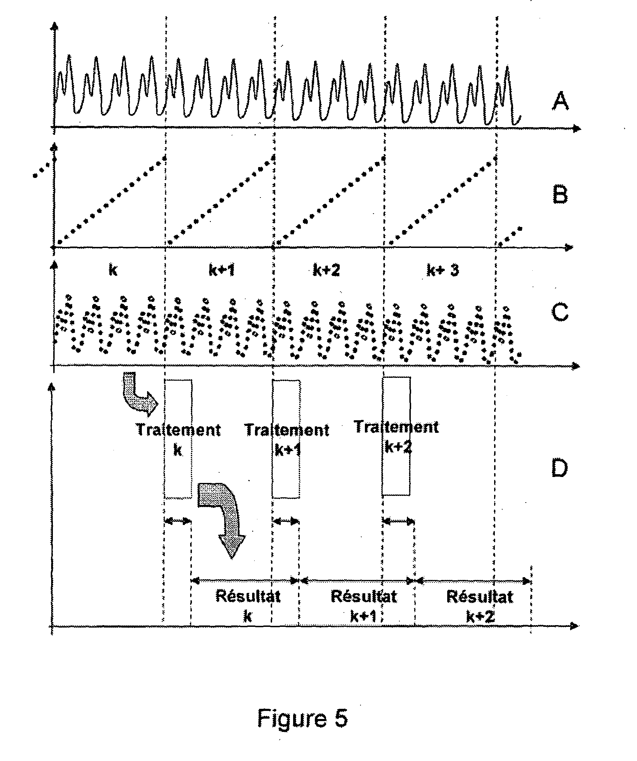

Cette étape est entièrement numérique et donc particulièrement robuste. Une méthode sera maintenant décrite plus précisément en référence à la figure 5 qui montre son séquencement.

La méthode est basée sur l'utilisation d'une cible (par exemple la cible moteur - ou toute autre cible avec laquelle on pourra associée des dents en nombre suffisants) pour mettre un échantillon de données en phase avec les tours moteurs (ou demi-tours). La durée d d’enregistrement de l'échantillon est mesurée.

On peut soit se baser sur le volant moteur qui comporte typiquement 58 dents (soit une dent tous les 6 degrés d'angle, avec 2 dents « manquantes » pour marquer chaque tour ou plus généralement sur une cible permettant de repérer le régime moteur. Dans ce cas, on va mesurer n valeurs de couples à chaque tour de vilebrequin. La fréquence d'échantillonnage $F_e$ va alors dépendre du régime moteur et vaut $F_e = n/(2\,t/^* \, d)$, équation dans laquelle $t$ est le nombre de tours et donc 2t le nombre de demi-tours. Cette méthode basée sur des « tops » présente l'avantage d'un enregistrement de taille constante.

Une autre solution consiste à imposer une fréquence d'échantillonnage fixe (autrement dit le nombre de points représentatifs d'un certains nombres de tours moteurs dépendra du régime moteur.

Dans les deux cas, le couple physique représenté par la courbe périodique A de la figure 5 est replacé en phase à partir d'un top vilebrequin comme montré en B, et une série d'échantillons k, k+1, etc.. est collectée (C).

Le régime moyen R du moteur (calculé en rad/s) est donné par l'équation $R = t/d$ et la fréquence de l'harmonique 2 vaut $F_{H2} = R/$.

A partir d'un échantillonnage sur 2t demi-tours à la fréquence d'échantillonnage $F_e$, on applique une transformée de Fourier rapide sur l'échantillon en observant l'amplitude à la fréquence de l'harmonique observé. C'est ce qui est figuré dans la partie D de la figure 5, en montrant que le décalage lié au temps de calcul après le temps d'acquisition est inférieur à une période. Les moyens de calcul peuvent être intégrés à un calculateur, en particulier un calculateur déjà intégré dans la plupart des véhicules, ou être programmé dans un ASIC, et vont fournir typiquement le régime moyen, le couple moyen, l'amplitude de l'harmonique et le taux d'acyclismes. A noter que le système étant capable de fournir le régime moyen du moteur, cette donnée peut être utilisée pour calculer la fréquence de l'harmonique à considérer.

A noter que même si l'invention a été décrite en relation avec un système de motorisation traditionnel, elle s'applique à d'autres systèmes et notamment aux moteurs hybrides.

Un cas particulièrement intéressant de l'invention reste le pilotage des stratégies de glissement partiel, dans lesquelles on enchaîne un série de collage-décollage, l'invention permettant de se placer à la limite du glissement total (qui lui ne sera plus que détecté, le découplage complet ne pouvant être quantifié).

## Revendications

1. Procédé de surveillance d'un embrayage dans une chaîne de transmission de puissance comportant une source de couple acyclique et un embrayage ne filtrant qu'une partie des acyclismes, **caractérisé par** l'observation d'un taux d'acyclisme après filtration et l'estimation du glissement à partir des variations dudit taux d'acyclisme, ledit taux d'acyclisme étant obtenu à partir d'une fonction numérique périodique représentant dans un espace fréquentiel le couple instantané filtré par l'embrayage préalablement échantillonné selon une fréquence ou une longueur (nombre de points échantillonnés) connue sur une durée correspondant à un multiple de la période entre deux explosions consécutives, ledit taux d'acyclisme étant défini comme une fonction de l'amplitude d'une harmonique de ladite fonction numérique périodique, ladite harmonique étant choisie comme significative pour la source d'acyclisme.

2. Procédé selon la revendication 1, **caractérisé en ce que** ladite fonction numérique périodique est une développée en série de Fourier discrète.

3. Procédé selon la revendication 2, **caractérisé en ce que** ledit taux d'acyclisme est défini comme le rapport entre l'amplitude de l'harmonique significative sur le couple moyen filtré par l'embrayage.

4. Procédé selon l'une des revendication 1 à 3 , **caractérisé en ce que** la source de couple acyclique est un moteur à 4 temps et x cylindres, et l'harmonique considérée est de rang x/2.

5. Procédé selon la revendication 4, **caractérisé en ce que** le couple instantané après filtration est mesuré pendant une durée correspondant à au moins un demi-tour moteur.

6. Procédé selon la revendication 5 **caractérisé en ce que** le couple instantané est mesuré à une fréquence F, exprimée en Hertz, au moins égale à N/15, N étant le régime moteur en tours par minute.

7. Procédé selon l'une des revendications précédentes, **caractérisé en ce que** ledit glissement est partiel.

8. Procédé selon l'une des revendications 1 à 6, **caractérisé en ce que** ledit glissement est total.

9. Procédé selon l'une des revendications précédentes, **caractérisé en ce que** ledit taux d'acyclisme est utilisé pour détecter le glissement ou estimer le taux de glissement partiel.

10. Procédé selon l'une des revendications précédentes, **caractérisé en ce que** ledit taux d'acyclisme est intégré dans la stratégie de contrôle du groupe motopropulseur du véhicule.

11. Procédé selon la revendication 10, **caractérisé en ce que** le top départ de la phase d'acquisition du couple moteur filtré est en phase avec une position connue d'une cible.

12. Procédé selon la revendication 11, dans laquelle la cible est le volant moteur.

13. Procédé selon l'une des revendications précédentes, **caractérisé en ce que** ledit taux d'acyclismes est intégré dans une stratégie de régulation de l'embrayage.

## Claims

1. Method for monitoring a clutch in a power transmission chain comprising an acyclic torque source and a clutch only filtering a portion of the acyclisms, **characterized by** the observation of an acyclism rate after filtration and the estimation of the slip from variations of the said acyclism rate, the said acyclism rate being obtained from a periodic numerical function representing in a frequential space the instantaneous torque filtered by the preciously sampled clutch according to a known frequency or a length (number of sampled points) over a duration corresponding to a multiple of the period between two consecutive explosions, the said acyclism rate being defined as a function of the amplitude of a harmonic of the said period numerical function, the said harmonic being selected as significant for the acyclism source.

2. Method according to Claim 1, **characterized in that** the said periodic numerical function is developed in a discrete Fourier series.

3. Method according to Claim 2, **characterized in that** the said acyclism rate is defined as the ratio between the amplitude of the significant harmonic over the mean torque filtered by the clutch.

4. Method according to one of Claims 1 to 3, **characterized in that** the acyclic torque source is a 4-stroke and x cylinder engine, and the harmonic concerned is of class x/2.

5. Method according to Claim 4, **characterized in that** the instantaneous torque after filtration is measured during a period corresponding to at least one half turn of the engine.

6. Method according to Claim 5, **characterized in that** the instantaneous torque is measured at a frequency F, expressed in Hertz, at least equal to N/15, N being the engine speed in revolutions per minute.

7. Method according to one of the preceding claims, **characterized in that** the said slip is partial.

8. Method according to one of Claims 1 to 6, **characterized in that** the said slip is total.

9. Method according to one of the preceding claims, **characterized in that** the said rate of acyclisms is used to detect the slip or to estimate the partial slip rate.

10. Method according to one of the preceding claims, **characterized in that** the said acyclism rate is integrated in the monitoring strategy of the power train of the vehicle.

11. Method according to Claim 10, **characterized in that** the starting point of the acquisition phase of the filtered engine torque is in phase with a known position of a target.

12. Method according to Claim 11, in which the target is the flywheel.

13. Method according to one of the preceding claims, **characterized in that** the said acyclism rate is integrated in a regulation strategy of the clutch.

## Patentansprüche

1. Überwachungsverfahren einer Kupplung in einer Leistungsübertragungslinie, die eine Quelle eines azyklischen Moments und eine Kupplung aufweist, die nur einen Teil der Azyklismen filtert, **gekennzeichnet durch** das Beobachten einer Azyklismenrate nach Filterung und Schätzen des Schlupfs ausgehend von den Variationen der Azyklismenrate, wobei die Azyklismenrate ausgehend von einer periodischen numerischen Funktion erzielt wird, die in einem Frequenzbereich das von der Kupplung gefilterte Momentandrehmoment darstellt, das zuvor gemäß einer Frequenz und einer bekannten Länge (Anzahl abgetasteter Punkte) über eine Dauer abgetastet wird, die einem Vielfachen der Periode zwischen zwei aufeinander folgenden Explosionen entspricht, wobei die Azyklismenrate als eine Funktion der Amplitude einer Harmonischen der periodischen numerischen Funktion definiert ist, wobei die Harmonische als für die Azyklismenquelle signifikant ausgewählt ist.

2. Verfahren nach Anspruch 1, **dadurch gekennzeichnet, dass** die periodische numerische Funktion eine Evolute einer diskreten Fourierschen Reihe ist.

3. Verfahren nach Anspruch 2, **dadurch gekennzeichnet, dass** die Azyklismenrate als das Verhältnis zwischen der Amplitude der signifikanten Harmonischen und dem von der Kupplung gefilterten mittleren Drehmoment definiert ist.

4. Verfahren nach einem der Ansprüche 1 bis 3, **da-**

**durch gekennzeichnet, dass** die Quelle des azyklischen Drehmoments ein 4-Takt-Motor mit x Zylindern und die betreffende Harmonische eine Harmonische des Rangs x/2 ist.

5. Verfahren nach Anspruch 4, **dadurch gekennzeichnet, dass** das Momentandrehmoment nach der Filterung während einer Dauer gemessen wird, die mindestens einer halben Motordrehung entspricht.

6. Verfahren nach Anspruch 5, **dadurch gekennzeichnet, dass** das Momentanmoment bei einer Frequenz F, die in Hertz ausgedrückt ist, mindestens gleich N/15 gemessen wird, wobei N die Motordrehzahl in Umdrehungen pro Minute ist.

7. Verfahren nach einem der vorhergehenden Ansprüche, **dadurch gekennzeichnet, dass** der Schlupf teilweise ist.

8. Verfahren nach einem der Ansprüche 1 bis 6, **dadurch gekennzeichnet, dass** der Schlupf total ist.

9. Verfahren nach einem der vorhergehenden Ansprüche, **dadurch gekennzeichnet, dass** die Azyklismenrate verwendet wird, um das Schlupfen zu erfassen oder die Teilschlupfrate zu schätzen.

10. Verfahren nach einem der vorhergehenden Ansprüche, **dadurch gekennzeichnet, dass** die Azyklismenrate in die Steuerstrategie des Antriebsaggregats des Fahrzeugs integriert ist.

11. Verfahren nach Anspruch 10, **dadurch gekennzeichnet, dass** der Ausgangspunkt der Erfassungsphase des gefilterten Motordrehmoments mit einer bekannten Position eines Ziels in Phase ist.

12. Verfahren nach Anspruch 11, bei dem das Ziel die Schwungscheibe ist.

13. Verfahren nach einem der vorhergehenden Ansprüche, **dadurch gekennzeichnet, dass** die Azyklismenrate in eine Kupplungsregelstrategie integriert ist.

Figure 1

Figure 2a

Figure 2b

Figure 2c

Figure 3a

Figure 3b

Figure 4

Figure 4bis

Figure 5

**EP 1 731 788 B1**

## RÉFÉRENCES CITÉES DANS LA DESCRIPTION

**Documents brevets cités dans la description**

- FR 2511154 A
- FR 2572032 A
- FR 2743128 A
- US 6102144 A